# FASCICULE DE BREVET EUROPEEN

(11) **EP 3 983 870 B1**
(45) Date de publication et mention de la délivrance du brevet: **27.03.2024**
(21) Numéro de dépôt: 20731108.5
(22) Date de dépôt: 10.06.2020
(51) Int. Cl.: G06F 3/01, A63F 13/60, G09B 9/00, G06F 16/29, G06Q 30/02, G09B 29/10

(54) **SYSTÈME NUMÉRIQUE DE PRÉPARATION DE MISSION**
DIGITALES MISSIONSVORBEREITUNGSSYSTEM
DIGITAL MISSION PREPARATION SYSTEM

(30) Priorité: 13.06.2019 FR 1906301
(43) Date de publication de la demande: 20.04.2022
(73) Titulaire: Airbus Defence and Space SAS, 31402 Toulouse Cedex 4 (FR)
(72) Inventeur: LEBEAUPIN, François, 78990 ELANCOURT (FR); DUMON, Fabien, 78990 ELANCOURT (FR); RAGGUENEAU, Nicolas, 78990 ELANCOURT (FR); FROUIN, Olivier, 78990 ELANCOURT (FR); OUSTRIERE, Bertrand, 78990 ELANCOURT (FR); VAUCLIN, Guillaume, 78990 ELANCOURT (FR)
(74) Mandataire: Cabinet Camus Lebkiri
(86) Numéro de dépôt international: PCT/EP2020/066136
(87) Numéro de publication internationale: WO 2020/249639

(56) Documents cités:
- WO-A1-2018/136517
- US-A1- 2015 260 474
- WEISSKER TIM ET AL: "Multi-Ray Jumping: Comprehensible Group Navigation for Collocated Users in Immersive Virtual Reality", 2019 IEEE CONFERENCE ON VIRTUAL REALITY AND 3D USER INTERFACES (VR), IEEE, 23 mars 2019 (2019-03-23), pages 136-144, XP033597502, DOI: 10.1109/VR.2019.8797807 [extrait le 2019-08-13]

## Description

### DOMAINE TECHNIQUE DE L'INVENTION

Le domaine technique de l'invention est celui des systèmes de simulation d'environnements et en particulier les simulateurs de missions numériques.

### ARRIERE-PLAN TECHNOLOGIQUE DE L'INVENTION

Les systèmes connus de réalité virtuelle ou de réalité augmentée se basent généralement sur des appareils de type casque de réalité virtuelle (« VR » selon la dénomination anglo-saxonne « Virtual Reality ») ou casque de réalité augmentée (« AR » selon la dénomination anglo-saxonne « Augmented Reality ») permettant d'afficher des objets virtuels en trois dimensions, soit dans un environnement virtuel dans le cas de la réalité virtuelle, soit en les superposant à l'environnement réel dans le cas de la réalité augmentée.

Il est connu de l'état de la technique le document WO2018136517 intitulé « AUGMENTED/VIRTUAL MAPPING SYSTEM ». Ce document décrit des systèmes de réalité virtuelle et de réalité augmentée visant à créer un espace de réalité virtuelle utilisable par plusieurs utilisateurs, notamment pour l'entraînement de soldats. Le système comprend un poste de traitement graphique, pour chaque utilisateur d'un casque de réalité virtuelle, le poste de traitement calculant les transformations d'images provenant de drones, la synchronisation de ces images et l'application d'un moteur physique pour l'approvisionnement, par un flux vidéo résultant, du casque auquel il est associé. Un tel système nécessite toutefois une importante puissance de calcul, chaque casque étant associé à son propre poste de traitement de l'information et de génération d'un flux vidéo.

D'autres dispositifs de réalité virtuelle sont décrits dans WO 2018/136517 A1 et Weissker et al, "Multi-Ray Jumping: Compréhensible Group Navigation for Collocated Users in Immersive Virtual Reality", 2019 IEEE CONFERENCE ON VIRTUAL REALITY AND 3D USER INTERFACES (VR), IEEE, 23 mars 2019, pages 136-144, DOI: 10.1109/ VR.2019.8797807.

Dans le cas de l'utilisation de la réalité virtuelle ou de la réalité augmentée pour de la simulation de missions, notamment la simulation de missions militaires, de sauvetage ou de gestion de crise, la multiplication des acteurs impliqués dans la mission entraîne la multiplication des postes de traitement de l'information pour permettre de fournir, à chaque casque, son propre flux vidéo. Un tel équipement n'est donc pas adapté à un déploiement en urgence ou sur le terrain. Il apparaît ainsi le besoin de fournir un système facilement transportable et d'encombrement limité en particulier pour des déploiements sur le terrain.

### RESUME DE L'INVENTION

L'invention offre une solution aux problèmes évoqués précédemment, en permettant un système facilement transportable, d'encombrement limité grâce à une centralisation des calculs par des serveurs au sein d'un réseau réalisant des fonctionnalités pour chacun des casques liés à une mission.

Un aspect de l'invention concerne ainsi un système de préparation de mission dans une zone géoréférencée déterminée à partir d'une cartographie numérique stockée en mémoire, comprenant un éditeur numérique de mission dans la zone géoréférencée générant un ensemble d'éléments de mission géoréférencés évolutifs au cours de plusieurs phases temporelles déterminées, caractérisé en ce qu'il comprend dans un réseau de communication au moins :
- un serveur de mission en liaison de communication avec l'éditeur de mission,
- un serveur de cartographie générant une carte à partir de la cartographie stockée,
- un serveur de partage d'au moins un centre de la carte et
- une pluralité de casques de réalité augmentée,
au moins un des casques de réalité augmentée, dit maître, étant apte à générer au moins une commande d'au moins une modification du centre de la carte, chaque casque de réalité augmentée étant apte à recevoir au moins deux jeux de tuiles d'élévation et de terrain provenant du serveur de cartographies sur requête de chaque casque, le serveur de mission étant apte à s'interfacer avec l'éditeur de mission et avec les casques de réalité augmentée pour partager et actualiser l'ensemble des éléments de mission géoréférencés sur requête de chaque casque et les faire évoluer temporellement sur requête d'au moins le casque maître.

Grâce à l'invention, les moyens liés à la cartographie et à la mission sont mutualisés pour les casques. L'encombrement réduit du système permet ainsi un déploiement sur le terrain grâce à une puissance de calcul limitée, une partie des fonctionnalités du système étant réalisées par le serveur de mission, le serveur de cartographie et le serveur de partage pour chaque casque impliqué dans la mission.

Le système de préparation de mission selon l'invention est pleinement interactif, un utilisateur pouvant réaliser des commandes en utilisant ses doigts ou ses mains ou simplement se positionner physiquement par rapport à la carte en pointant avec son doigt un élément d'intérêt.

Outre les caractéristiques qui viennent d'être évoquées, le système de préparation de mission selon un aspect de l'invention peut présenter une ou plusieurs caractéristiques complémentaires parmi les suivantes, considérées individuellement ou selon toutes les combinaisons techniquement possibles :
- chaque casque comprend une fonction de simulation d'hologramme, par affichage stéréoscopique, l'hologramme comprenant une cartographie en trois dimensions dans laquelle les tuiles de terrain sont plaquées sur un relief constitué par les tuiles d'élévation et superposant les éléments de mission à hauteur du relief.
- la fonction de simulation d'hologramme de chaque casque réalise un calcul d'hologramme en trois dimensions dans une étendue en bordure de l'hologramme affiché, prêt à être projeté de façon fluide en cas de modification du centre de la carte.
- ledit casque maître active au moins une caméra pour reconnaissance au moins partielle d'une main d'un utilisateur du casque maître pour actionner des fonctions, proposées dans un menu affiché, pour au moins une translation du centre de la carte.
- le dernier centre de la carte réglé par le casque maître est pris en compte pour les requêtes de tuiles de chaque casque, des transmissions de tuiles antérieures sur des centres modifiés intermédiaires étant abandonnées.
- le système de préparation comprend au moins un marqueur disposé sur au moins un objet matériel autour duquel viennent les utilisateurs des casques, une image dudit marqueur étant capturée par une caméra de chaque casque et traitée pour réaliser un ajustement du positionnement du centre de la carte et un ajustement de l'orientation de la carte.
- ledit objet matériel autour duquel viennent les utilisateurs des casques se présente sous la forme d'une table de surface correspondant sensiblement à la surface au sol de l'hologramme affiché.
- le serveur de partage réalise également un partage d'au moins la position de chaque casque par rapport à la carte, ainsi qu'un partage du niveau de zoom.
- le serveur de cartographie calcule et stocke en mémoire, à partir de la cartographie numérique haute définition, une première série de tuiles d'un premier niveau de définition élevée et au moins une deuxième série de tuiles d'un deuxième niveau de définition moindre.
- chaque casque comprend une fonction de détection de son environnement matériel.

L'invention et ses différentes applications seront mieux comprises à la lecture de la description qui suit et à l'examen des figures qui l'accompagnent.

### BREVE DESCRIPTION DES FIGURES

La description détaillée sera faite en référence aux figures suivantes données à titre d'exemples non limitatifs dans lesquelles :
- la figure 1 montre une représentation schématique d'un exemple d'échange de données dans un système de préparation de mission selon l'invention ;
- la figure 2 montre également une représentation schématique d'un exemple d'échange de données dans un système de préparation de mission selon l'invention ;
- la figure 3 montre une représentation schématique d'un exemple de mise en oeuvre d'une simulation d'hologramme pour un casque de réalité augmentée selon l'invention ;
- la figure 4 montre une représentation schématique d'un exemple de gestion de cartographie selon l'invention ;
- la figure 5 montre de façon schématique un exemple d'utilisation du système selon l'invention par deux utilisateurs physiquement positionnés autour d'une table ;
- la figure 6 montre de façon schématique un exemple d'utilisation du système selon l'invention par deux utilisateurs l'un étant physiquement positionnés autour de la table, l'autre étant représenté par un avatar ;
- la figure 7a montre une représentation schématique d'un exemple de gestion d'affichage de données de mission pour le casque maître ;
- la figure 7b montre également une représentation schématique d'un exemple de gestion d'affichage de données de mission pour le casque maître ;
- la figure 8 montre de façon schématique un marqueur disposé sur une table et détecté par les caméras des casques de réalité augmentée ;
- la figure 9 montre de façon schématique un exemple d'interaction d'un utilisateur avec l'hologramme cartographique en trois dimensions représentant la carte virtuelle ainsi que les éléments de mission ;
- la figure 10 est un exemple de représentation schématique du partage des positions relatives des casques et de l'hologramme cartographique ;
- la figure 11 est une représentation schématique d'un exemple de fonctions mises en oeuvre dans plusieurs entités réparties au sein du système selon l'invention.

### DESCRIPTION DETAILLEE

Les figures sont présentées à titre indicatif et nullement limitatif de l'invention.

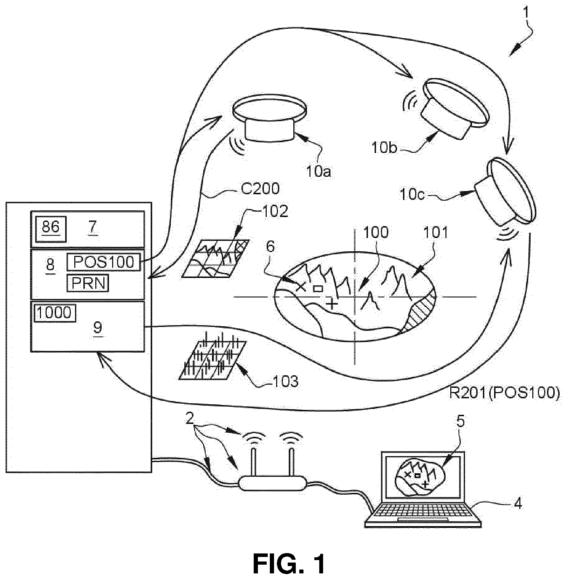

[Fig. 1] La figure 1 montre un exemple d'échange de données dans un système de préparation de mission selon l'invention.

Le système de préparation de mission 1 représenté à la Figure 1 comprend des éléments matériels et logiciels, permettant un travail collaboratif autour d'une carte virtuelle 101 présentée sous la forme d'un hologramme en trois dimensions. Un tel hologramme est par exemple simulé par affichage de deux images stéréoscopiques dans le casque de réalité augmentée. Cette carte virtuelle 101 apparaît pour chaque utilisateur grâce à la projection de l'hologramme cartographique dans chaque casque. Le système de préparation de mission 1 comprend en effet une pluralité de casques de réalité augmentée 10a, 10b et 10c.

Chaque casque 10a, 10b et 10c est un périphérique autonome, doté d'un système d'environnement, d'un processeur et d'une mémoire dans laquelle sont installés des applications. Chaque casque comprend notamment une application de gestion des capteurs intégrés au casque. Chaque casque comprend également une application de gestion des liaisons de communication avec différents serveurs. Chaque casque peut ainsi requérir régulièrement les données nécessaires pour afficher une paire d'images stéréoscopiques formant son hologramme cartographique. Chaque casque 10a, 10b et 10c est doté d'un système d'affichage qui projette un contenu stéréoscopique permettant de visualiser des objets virtuels en trois dimensions. L'actualisation du couple d'images stéréoscopiques peut par exemple faire suite à une modification du contenu partagé ou à un déplacement du casque, ce qui permet de se déplacer autour des objets virtuels en trois dimensions. Le casque est par exemple du type HOLOLENS-2 ^{®} fourni par l'entreprise Microsoft ^{®}.

Chaque casque 10a, 10b et 10c est relié, par un réseau de communication 2, à un serveur de mission 7, à un serveur de partage 8 et à un serveur de cartographie 9, chaque serveur étant compris dans le système de préparation de mission 1. Le réseau de communication peut par exemple se présenter sous la forme d'un réseau incluant un ou plusieurs réseaux filaires de type Ethernet ou Internet et un ou plusieurs réseaux sans fil de type Wi-Fi gérés par un ou plusieurs routeurs.

Le système de préparation de mission 1 comprend en outre un éditeur de mission 4 relié au réseau de communication. L'éditeur de mission 4 a la capacité de se connecter au serveur cartographique 9 et au serveur de mission 7 pour contribuer à l'élaboration d'une mission. L'éditeur de mission 4 permet l'exécution d'une fonction de création F80 de mission, d'une fonction de modification F81 de mission ou d'une fonction de suppression F82 de mission. Différentes phases et différents éléments 6 de mission en correspondance avec une ou plusieurs phases sont ainsi créés, modifiés ou supprimés. L'éditeur de mission 4 exécute en outre une fonction d'édition de mission qui est alors transférée au serveur de mission.

Par « mission » on entend une opération comprenant un objectif, par exemple une opération de secours ou une opération militaire, dans une zone géoréférencée. Une zone géoréférencée est une zone géographique à laquelle sont attribuées des coordonnées dans un repère géographique. Une mission comprend des phases Ph1, Ph2, Ph3. Par « phase » Ph1, Ph2 et Ph3 on entend une étape de cette mission. Par exemple, dans le cas d'une mission de secours à une personne ensevelie, la mission peut comprendre des phases Ph1 d'escalade, des phases Ph2 de déblayage et des phases Ph3 de sauvetage. Une phase comprend des éléments 6 de mission disposés à des emplacements géoréférencés. Par « élément » on entend un individu, un groupe d'individus, une unité au sol, sur eau ou aérienne, un point d'intérêt ou un autre objet virtuel.

L'éditeur de mission 4 peut également être aussi utilisé pour visualiser une mission en cours, dans un mode dédié. A cet effet l'éditeur comprend une fonction F84 bac à sable ou « sandbox », en anglais. Il permet alors un affichage du fond cartographique, éventuellement représenté en 3 dimensions, sur lequel sont disposés les éléments 6 de mission, la visualisation se faisant sur un écran classique à deux dimensions. La fonction F84 de collaboration hybride, également appelée mode « bac-à-sable », permet à l'éditeur numérique 4 de se synchroniser avec les casques 10a, 10b et 10c grâce à un chargement périodique de la mission et de la carte virtuelle 101, auprès du serveur de cartographie 9, en fonction du centre 104 de la carte 101 et du niveau de zoom partagés par le serveur de partage 8 via sa fonction de partage FP62, tandis que la mission et la phase en cours sont récupérés auprès du serveur de mission 7.

Le serveur de partage 8 comprend par exemple, dans un espace mémoire partagé, les positions spatiales relatives des casques 10a, 10b et 10c et du centre 104 de la carte virtuelle 101. Le serveur de partage comprend notamment une fonction FP60 de partage des positions et des orientations de chaque casque dans un espace virtuel. Le serveur de partage comprend également une fonction FP62 de partage du centre de la carte et du niveau de zoom. Le serveur de partage comprend par exemple également une fonction FP61 de partage des éléments en cours de modification.

Le serveur de cartographie 9 est configuré pour fournir deux jeux de tuiles à chaque casque : un jeu de tuiles d'élévation 102 et un jeu de tuiles de terrain 103. Le serveur de cartographie comprend par exemple une fonction FI50 d'importation d'images géo-référencée stockées dans un espace mémoire sous la forme d'une cartographie numérique 1000. Ces images sont par exemple des images satellites permettant de couvrir une zone géographique d'intérêt. Le serveur de cartographie comprend par exemple également une fonction FI51 d'importation de modèles d'élévation. Ces modèles d'élévation peuvent être issus de bases de données ou calculés à partir d'images stéréoscopiques.

Le serveur de cartographie comprend également une fonction FI53 de calcul et d'envoi des deux jeux de tuiles d'élévation et de terrain en fonction du niveau de zoom. Les tuiles de terrain sont également désignées par tuiles d'images. Les images satellites seront ainsi plaquées sur les modèles d'élévation pour la visualisation, dans chaque casque d'un hologramme en trois dimensions montrant notamment une carte réaliste en relief.

Le serveur de cartographie 9 a, par exemple, la capacité de calculer à l'avance, pour une même zone déterminée, les tuiles pouvant composer cette zone, à différents niveaux de zoom. Ceci permet d'optimiser la vitesse d'affichage des tuiles sur une zone lors de changement de zoom ou lors d'un déplacement du centre de la carte. A cet effet, le serveur de cartographie comprend une fonction FI52 de pré-calcul des tuiles de terrain aux différents niveaux de zoom.

Le serveur de mission 7 est configuré pour fournir les données nécessaires à l'affichage, dans l'hologramme cartographique, de la mission en cours, à savoir les positions actualisées des éléments de mission, en fonction du niveau de zoom et du centre de carte. Lors du passage d'une phase à une autre, le serveur de mission peut également générer des éléments de transition, comme par exemple une flèche représentant le déplacement d'un élément lors du passage d'une phase à l'autre. Chaque casque est en mesure de faire régulièrement une requête pour l'acquisition, auprès du serveur de mission 7, des données représentatives de la mission en cours.

Le serveur de mission 7 comprend par exemple une fonction FM30 de création d'une nouvelle mission. Le serveur de mission peut comprendre également une fonction FM40 de chargement de cette mission dans chaque casque et une fonction de chargement FM41, dans chaque casque, d'une phase en cours.

Le casque maître peut notamment intervenir sur la mission chargée afin de la modifier. A cet effet, le serveur de mission 7 peut comprendre une fonction de renommage de la mission FM31, une fonction FM33 de création d'une nouvelle phase dans une mission, une fonction FM34 de renommage de phase de la mission, une fonction FM35 de suppression de phase de la mission ou une fonction FM36 de modification de l'ordre des phases de la mission.

Le serveur de mission peut également comprendre une fonction FM37 de création d'un élément 6 de mission dans une phase, une fonction de modification FM38 d'un élément 6 de mission ou une fonction FM39 d'effacement d'un élément 6 de mission.

Par ailleurs, le serveur de mission comprend également une fonction FM32 d'effacement d'une mission.

De façon symétrique, le casque maître peut exécuter une fonction FC07 de création d'une mission, une fonction FC08 de renommage d'une mission, une fonction FC09 de création d'une phase d'une mission, une fonction FC10 de modification d'une phase de mission, une fonction FC11 de suppression d'une phase de mission, une fonction FC12 de création d'éléments 6 de mission, une fonction FC13 de modification d'éléments 6 de mission et une fonction FC14 de suppression d'éléments de mission.

La carte virtuelle 101 en trois dimensions est réalisée en plaquant des tuiles de terrain 102 sur un relief constitué par des tuiles d'élévation 103. Ces tuiles de terrain 102 et d'élévation 103 sont fournies par le serveur de cartographie 9. Chacun des casques 10a, 10b et 10c peut faire régulièrement une requête R201 de tuiles de terrain 102 et de tuiles d'élévation 103, la requête R201 comprenant la position pos100 du centre 104 de la carte 101. La position pos100 du centre 104 de la carte 101 peut notamment être réglée par le casque maître.

Lorsque le casque maître envoie une commande C200 comprenant un nouveau centre ou un nouveau niveau de zoom, le serveur de partage 8 transmet alors une notification d'un changement de centre ou de zoom à l'ensemble des casques. Chaque casque inclut alors la nouvelle position pos100 dans sa requête R201 de tuiles.

Le casque maître peut par exemple exécuter une fonction FC15 de réglage du niveau de zoom, le niveau de zoom étant mémorisé et partagé par le serveur de partage.

Le casque maître peut également exécuter une fonction FC16 de translation du centre de la carte selon un axe des abscisses ou selon un axe des ordonnées pour régler un nouveau centre de la carte, mémorisé et partagé par le serveur de partage. Le casque maître peut également exécuter une fonction FC21 de centrage de la carte autour d'un point saisi par l'utilisateur maître, pour régler un nouveau centre de la carte, mémorisé et partagé par le serveur de partage.

Le casque maître peut également exécuter une fonction FC17 de réglage de l'exagération verticale dans l'hologramme cartographique, ce niveau d'exagération étant mémorisé et partagé par le serveur de partage.

Le niveau de zoom, le niveau d'exagération et le centre de la carte partagés peuvent également être accédés par le serveur de cartographie, l'éditeur de mission ou le serveur de mission.

A la réception de la requête R201, le serveur de cartographie 9 génère, à partir de la cartographie 1000 qu'il stocke en mémoire, les tuiles de terrain 102 et d'élévation 103 correspondant à la position comprise dans la requête R201 et en fonction du niveau de zoom pour fournir les tuiles de terrain 102 et d'élévation 103 aux casques qui en ont fait la requête.

Chaque casque de réalité augmentée 10a, 10b et 10c étant autonome, c'est l'application installée sur chaque casque qui a la gestion de l'actualisation des données. Chaque casque peut comprendre une fonction FC27 de chargement de carte. Chaque casque peut également comprendre une fonction FC20 d'affichage d'une ou plusieurs couches images géo-référencées, en fonction des données d'élévation.

Ainsi l'actualisation de l'hologramme cartographique s'appuie notamment sur :
- le serveur 8 de partage de la position du centre 104 de la carte 101 et du niveau de zoom,
- le serveur de mission 7 qui partagent des informations nécessaires à l'affichage de la mission, comme par exemple les informations sur la mission en cours et notamment une phase en cours ou une transition d'une phase à l'autre, en fonction du centre de la carte et du niveau de zoom.
- les applications installées sur les casques 10a, 10b et 10c, notamment pour la gestion de l'affichage stéréoscopique d'un hologramme cartographique incluant notamment des éléments 6 de mission superposés sur une carte en trois dimensions,
- le serveur de cartographie 9 qui fournit les tuiles à chaque casque, sur requête, en fonction du centre de la carte et du niveau de zoom.

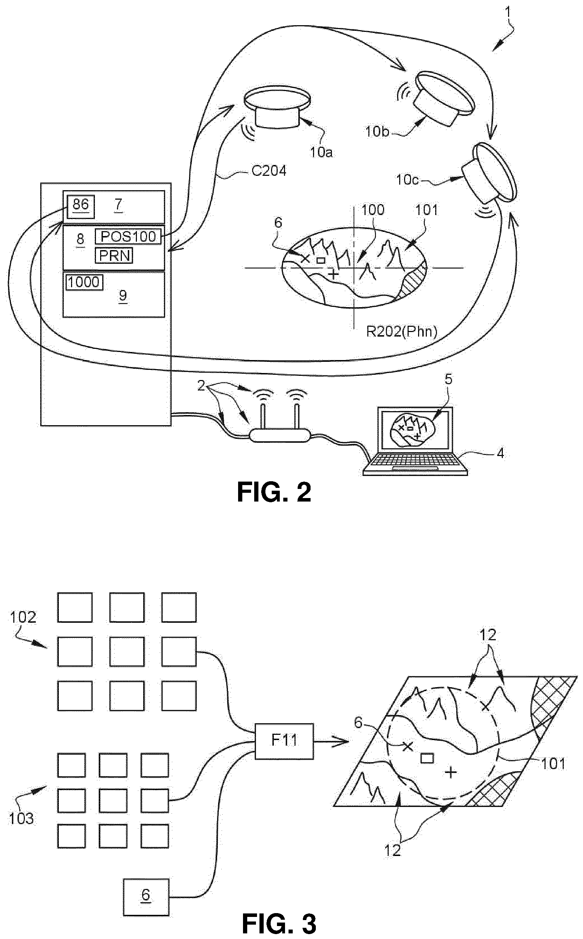

[Fig.2] La figure 2 montre exemple d'échange de données dans un système de préparation de mission selon l'invention où des données d'actualisation de la mission en cours sont échangées. Chaque casque comprend par exemple une fonction FC01 de chargement d'une mission stockée sur le serveur de mission et une fonction FC02 d'affichage des éléments 6 de mission dans l'hologramme cartographique. Chaque casque peut également comprendre une fonction FC25 de vérification périodique de la phase en cours.

Le casque 10a, qui est ici le casque maître, envoie une commande C204 au serveur de partage pour faire évoluer la phase en cours à la phase suivante ou à la phase précédente. Le casque maître exécute par exemple une fonction FC03 de passage à la phase suivante ou une fonction FC04 de passage à la phase précédente.

Le serveur de partage notifie alors chacun des casques 10a, 10b et 10c du changement de phase en cours. Chaque casque peut alors réaliser une requête R202 de mise à jour des éléments 6 de mission. Ici seul l'exemple du casque 10c est représenté pour plus de clarté sur le dessin. Cette requête R202, envoyée au serveur de mission 7, comprend une indication de la nouvelle phase PhN. A la réception de cette requête R202, le serveur de mission 7 transmet à chaque casque des données représentatives des éléments 6 de mission actualisés. Cette actualisation consiste par exemple en une nouvelle position ou une suppression ou encore un nouvel attribut modifiant la représentation d'élément 6 de mission. Chaque casque comprend par exemple une fonction FC26 de chargement d'une nouvelle phase. Chaque casque peut également comprendre une fonction FC06 d'animation affichant des éléments de transition pour un ou plusieurs éléments 6 de mission, ces éléments de transition étant représentatifs d'un mouvement ou d'un trajet d'une position à l'autre.

Ainsi lors d'un changement de phase de mission, chaque casque peut par exemple générer des objets graphiques d'animation représentatifs d'un déplacement d'un objet sur la carte. Lorsque qu'un élément 6 de mission est présent dans la phase courante de la mission et dans la phase suivante de la mission, alors une animation peut être réalisée pour représenter le déplacement de cet élément 6 sur la carte 101. L'élément 6 de mission, suit par exemple le relief du terrain, en parcourant un chemin reliant, en ligne droite, le point de départ appartenant à la phase courante et le point final qui appartient à la phase suivante. Ce chemin est par exemple parcouru en un temps déterminé quelle que soit la distance entre les deux points.

[Fig. 3] La figure 3 montre une représentation schématique d'un exemple de mise en oeuvre de simulation d'hologramme pour un casque de réalité augmenté.

La fonction de simulation d'hologramme F11 est réalisée par chaque casque 10a, 10b et 10c grâce à un affichage stéréoscopique. Le serveur de cartographie fournit par exemple deux jeux de tuiles d'image et de relief couvrant une même étendue géographique en entrée de la fonction de simulation d'hologramme F11. La fonction de simulation d'hologramme F11 prend en entrée une pluralité de tuiles de terrain 102, une pluralité de tuiles d'élévation 103, par exemple reçues du serveur de cartographie 9, ainsi que des données représentatives des éléments 6 de mission.

En sortie de la fonction de simulation d'hologramme F11, l'hologramme cartographique simulé comprend la carte virtuelle 101 en relief et les éléments 6 de mission.

Un hologramme simulé est un objet virtuel en trois dimensions affiché sur un casque de réalité augmentée 10a, 10b et 10c de manière stéréoscopique à l'aide de deux écrans : un écran pour chaque oeil.

L'hologramme cartographique comprend la carte virtuelle 101 en trois dimensions réalisée en plaquant les tuiles images sur le relief et en superposant les éléments 6 de mission à hauteur du relief. La limite 101 en traits pointillés représente par exemple la cartographie en relief effectivement affichée dans l'hologramme cartographique.

Les données de génération d'hologramme sont par exemple calculées également dans une étendue 12 située au-delà de la bordure de la zone 101 affichée, de façon à augmenter la fluidité d'affichage en cas de modification du centre 104 de la carte 101. Les données de génération d'hologramme peuvent ainsi être calculées pour un hologramme plus étendu que l'hologramme cartographique affiché.

Plusieurs fonctions élémentaires sont par exemple utilisées pour réaliser cette fonction F11 de simulation d'hologramme.

Chaque casque comprend par exemple également la prise en compte de l'exagération du relief, le relief pouvant être réduit ou exagéré à partir des mêmes tuiles d'élévation.

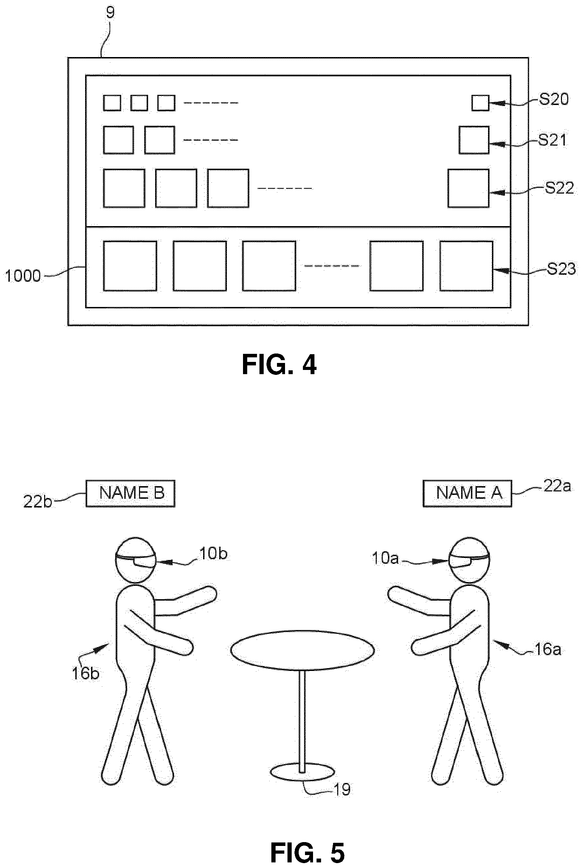

[Fig. 4] La figure 4 montre une représentation schématique d'un exemple de gestion de cartographie.

Le serveur de cartographie 9 peut ainsi calculer et stocker en mémoire, à partir d'une zone étendue haute définition de surface déterminée, une première série S20 de tuiles d'un premier niveau de définition élevé et au moins une deuxième série S21 de tuiles d'un deuxième niveau de définition moindre. On entend par « zone étendue haute définition de surface déterminée », une image haute définition, provenant par exemple d'un satellite, d'une aire déterminée, englobant par exemple l'ensemble d'un quartier d'une ville. Le serveur de cartographie 9 peut ainsi calculer plusieurs séries de tuiles S20, S21, S22 et S23 de niveaux de définition différents. De la sorte, ces différents niveaux de définition permettent de réaliser des zooms rapidement, sans avoir à calculer chaque jeu de tuiles et fournir plus rapidement les jeux de tuiles aux casques 10a, 10b et 10c.

Par exemple, si à la figure 4, c'est la série de tuiles S23, de moindre définition, qui est utilisée pour la visualisation, lorsqu'un utilisateur souhaite ensuite zoomer, le serveur de cartographie peut immédiatement accéder à la série S22 suivante à fournir aux casques 10a, 10b et 10c. De la même manière en cas de déplacement du centre de la carte, les tuiles de même définition sont accédées directement par le serveur.

[Fig. 5] La figure 5 montre de façon schématique un exemple d'utilisation du système selon l'invention par deux utilisateurs physiquement positionnés autour de la table.

Les utilisateurs 16a et 16b représentés sont ici situés dans la même pièce et se positionnent autour d'une table 19. La table 19 est un élément matériel se trouvant dans la pièce avec les utilisateurs. La table peut notamment délimiter physiquement la zone de projection de l'hologramme cartographique, évitant alors à un utilisateur de se tenir debout au milieu de l'hologramme cartographique. La table 19 ronde s'adapte à l'hologramme cartographique présentant une limite circulaire. La table en tant qu'élément matériel participe à la création de l'environnement virtuel de chaque casque 10a et 10b lors de la spatialisation. La spatialisation est une opération réalisée par chaque casque qui consiste à géolocaliser chaque casque dans son environnement et positionner l'ensemble des casques dans un environnement virtuel recréé par les casques à l'aide de leurs capteurs. Chaque casque comprend donc une fonction de détection de son environnement à l'aide de ces capteurs. Ces capteurs peuvent être, par exemple, une caméra, un capteur de profondeur, ou tout autre capteur permettant à un casque de détecter son environnement matériel.

Chaque utilisateur 16a et 16b porte un casque de réalité augmentée 10a et 10b et évolue autour de la table 19. Dans chaque casque de réalité augmentée 10a et 10b, la table physique 19 est augmentée par une carte holographique en trois dimensions. Il est alors possible d'« augmenter » un ou plusieurs participants 16a et 16b en affichant, au-dessus de chaque casque, des données relatives à cet utilisateur 16a ou 16b. Ces données peuvent être, de manière non limitative, son nom 22a et 22b ou son statut.

Il existe au moins deux statuts : un statut « maître » et un statut « spectateur ». Un casque avec le statut « maître » est par exemple en mesure de modifier les données de missions. Lors de la modification de ces données, étape également désignée par édition, les casques avec le statut « spectateur » visualisent les données en cours de modification par l'utilisateur du casque maître, comme par exemple le déplacement d'un élément de mission ponctuel ou d'un élément de mission multipoints.

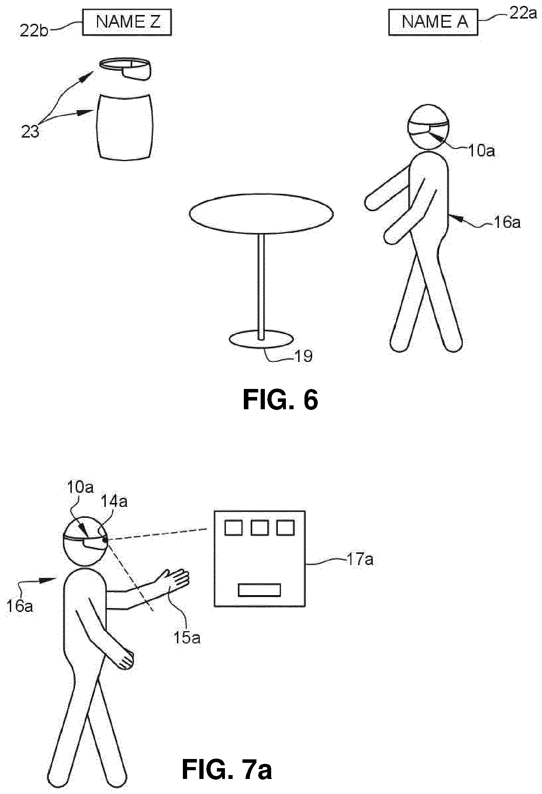

Cette capacité est aussi exploitée lorsque le participant est à distance dans une autre pièce, le participant est alors représenté autour de la carte par un avatar 23, comme représente à la figure 6.

[Fig. 6] La figure 6 montre de façon schématique un exemple d'utilisation du système selon l'invention par deux utilisateurs l'un étant physiquement positionnés autour de la table, l'autre étant représenté par un avatar.

A la Figure 6, l'utilisateur 16b n'est pas présent physiquement autour de la table 19, mais se trouve à distance celle-ci, par exemple à plusieurs milliers de kilomètres. Tandis que l'utilisateur 16a est présent physiquement autour de la table 19, l'utilisateur 16b, non présent physiquement autour de la table 19, est représenté par un avatar 23, dans l'hologramme généré par l'autre utilisateur. Cet avatar 23 est une représentation virtuelle de l'utilisateur non physiquement présent dans la pièce. La représentation virtuelle 23 s'appuie alors sur la position initiale du casque 10b dans la pièce dans laquelle il se trouve, sur l'orientation initiale du casque selon au moins trois axes puis sur les modifications de positionnement et d'orientation. La représentation virtuelle consiste par exemple en un objet virtuel représentant le corps, l'uniforme ou le buste de l'utilisateur 16b.

[Fig. 7a] La figure 7a montre une représentation schématique d'un exemple de gestion d'affichage de données de mission pour le casque maître.

Comme représenté à la figure 7a, l'utilisateur 16a dispose du casque 10a qui présente le statut de casque maître. Le casque maître 10a comprend notamment une caméra 14a et est configuré pour activer la caméra 14a et effectuer une reconnaissance au moins partielle d'une main 15a de l'utilisateur 16a. Cette reconnaissance de la main 15a de l'utilisateur 16a permet d'actionner des fonctions, proposées dans un menu affiché 17a. Ces fonctions peuvent comprendre par exemple une fonction de translation du centre 104 de la carte 101 ou une modification de données de mission, ou encore une action de zoom sur la carte 101. En cliquant sur des boutons, le casque maître réalise par exemple des fonctions de zoom sur la carte ou sur un élément 6 de mission, d'exagération du relief, ou encore de changement de phase de la mission.

Comme décrit précédemment, le casque maître est capable de réaliser des requêtes de changement de phase de la mission en cours, au serveur de mission 7. Le serveur de mission 7 peut alors partager cette information de changement de phase de mission afin que chaque casque demande une actualisation des éléments de mission.

L'évolution temporelle d'éléments 6 de mission, au cours des différentes phases, peut être réalisée sur commande du casque maître ou par un poste de travail en liaison avec le serveur de mission 7.

Le casque maitre 10a peut par exemple bénéficier de l'affichage de panneaux 17a en trois dimensions pour contrôler la préparation de mission. Ces panneaux peuvent comprendre un panneau de choix de la mission, un panneau d'outils cartographiques notamment pour zoomer, réaliser une exagération verticale ou encore changer de couche cartographique, un panneau d'édition permettant l'ajout, la suppression ou la modification d'éléments 6 de mission tels que des symboles ponctuels ou des symboles multipoints.

Dans un autre mode de réalisation, il est possible également d'utiliser un dispositif de pointage (non représenté) pour réaliser des modifications des données de mission, ou pour appuyer sur les boutons permettant de réaliser des fonctions sur la carte virtuelle 101. Ce dispositif de pointage peut par exemple être une télécommande.

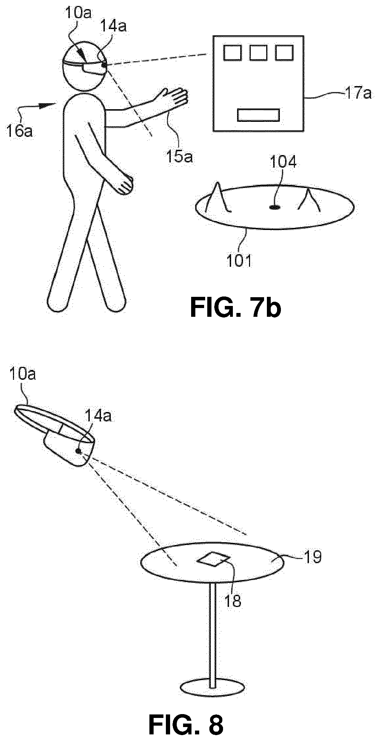

[Fig. 7b] La figure 7b montre une représentation schématique d'un exemple de gestion d'affichage de données de mission pour le casque maître.

A la figure 7b, les données de configuration sont superposées sur la carte virtuelle 101. Ainsi, il est par exemple possible de visualiser différentes étapes de la mission ou d'afficher des données sur des éléments 6 de mission. Le casque 10a peut n'afficher le menu de commande 17a que lorsqu'il reconnaît la main 15a de l'utilisateur 16a. Cela permet par exemple de n'afficher des fonctions de modification que lorsque l'utilisateur 16a le souhaite, afin d'avoir une meilleure lisibilité de la carte virtuelle 101.

[Fig. 8] La figure 8 montre de façon schématique un marqueur disposé sur une table et détecté par les caméras des casques de réalité augmentée.

Le marqueur 18 est disposé sur un objet matériel 19 autour duquel viennent les utilisateurs des casques. L'objet physique peut être une table 19, permettant de positionner dans le monde réel le marqueur physique 18 à la hauteur souhaitée pour l'affichage de la carte virtuelle 101. Le marqueur 18 permet aux casques d'avoir un repère commun et de connaître l'objet physique 19 sur lequel placer la carte virtuelle 101. Le marqueur 18 est lu par une caméra 14a de chaque casque. Cette lecture du marqueur 18 permet à chaque casque de réaliser un ajustement de haute précision du positionnement du centre 104 de la carte 101 ainsi qu'un ajustement de haute précision de l'orientation de la carte 101. En apportant une grande précision dans le positionnement relatif des casques et de l'hologramme cartographique, on augmente la qualité de l'interactivité entre les utilisateurs, comme par exemple, lorsqu'un utilisateur vient pointer avec son doigt sur l'hologramme cartographique.

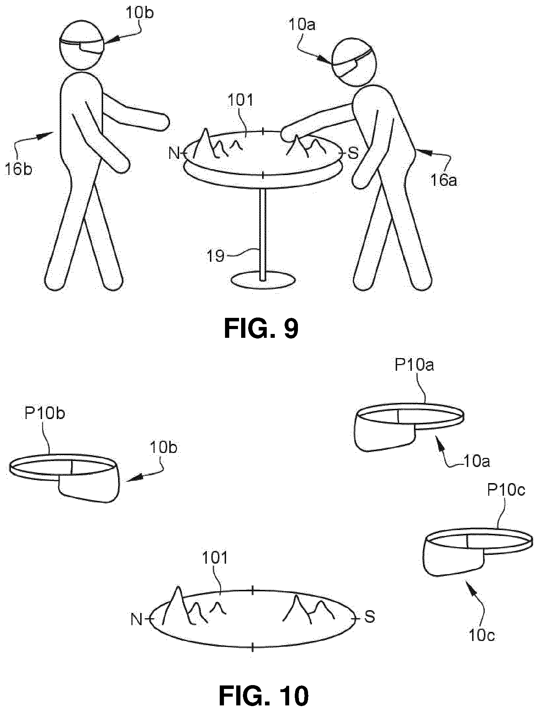

[Fig. 9] La figure 9 montre de façon schématique un exemple d'interaction d'un utilisateur avec l'hologramme cartographique en trois dimensions représentant la carte virtuelle ainsi que les éléments de mission.

Chaque casque 10a et 10b est autonome et recrée sa propre vue de la carte 101. L'hologramme cartographique créé par chaque casque prend notamment en compte les données de mission et les données cartographiques fournies respectivement par le serveur de mission 7 et par le serveur de cartographie 9. Chaque casque utilise également des paramètres spatiaux représentatifs de son environnement et de sa position relativement à son environnement. D'autres paramètres partagés tels que les statuts maitre ou spectateur des casques sont également utilisés.

La carte 101 en trois dimensions est projetée dans un hologramme par chaque casque. L'hologramme cartographique peut par exemple être entouré d'une boussole pour un repérage simple de l'orientation. Cette représentation en trois dimensions est visualisable dans le casque de réalité augmentée 10a et 10b de chaque participant 16a et 16b. La carte 101 fournie par le serveur de cartographie est replacée dans un repère propre à chaque casque. Le marqueur 18 permet de définir avec plus de précision l'environnement de chaque casque et ainsi positionner avec plus de précision chaque hologramme cartographique notamment sa hauteur, ses dimensions et son orientation. Ainsi, chaque hologramme est positionné par rapport à un repère matériel commun, ce qui facilite l'interactivité. Un utilisateur pourra pointer du doigt un endroit de son hologramme cartographique, cet endroit étant identique sur les hologrammes des autres casques.

La zone de la carte 101 affichée est composée d'une pluralité de tuiles de terrain 102, également désignées par tuiles images, et d'une pluralité de tuiles d'élévation 103 fournies par le serveur de cartographie 9.

On peut également envisager la fourniture de tuiles de terrain et d'élévation supplémentaires au-delà de la zone de la carte à afficher, de façon à avoir des tuiles pré-chargées. La zone affichée peut être, de manière non limitative, un disque, un rectangle, un carré. Les tuiles pré-chargées et prétraitées, par chaque casque, permettent une translation de la zone sans latence, car sans temps de chargement. Si la translation de la zone affichée ne dépasse pas de la zone préchargée, alors l'affichage des tuiles est en effet immédiat.

[Fig. 10] La figure 10 est un exemple de représentation schématique du partage des positions relatives des casques et de l'hologramme cartographique.

Le serveur de partage 8 réalise ici un partage de la position P10a, P10b et P10c et de l'orientation de chaque casque 10a, 10b et 10c par rapport à la carte 101. Des positions relatives des casques sont établies ainsi qu'une position relative de la carte virtuelle 101. Chaque casque aura ainsi un point de vue différent sur la carte lors de la projection de l'hologramme cartographique.

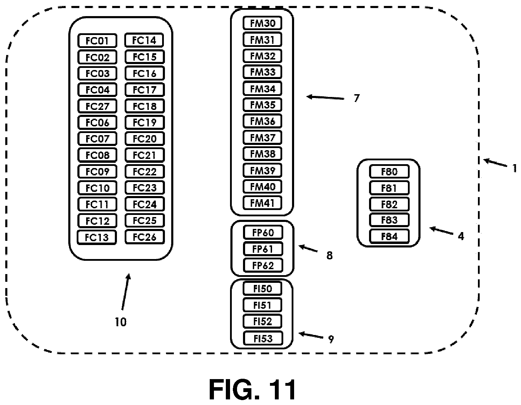

[Fig. 11] La figure 11 est une représentation schématique d'un exemple de fonctions mises en oeuvre dans plusieurs entités réparties au sein du système selon l'invention.

Comme expliqué précédemment, le serveur de cartographie 9 peut exécuter une fonction FI50 d'import d'images géoréférencées, par exemple au format geoTiff ou encore Jpeg2000, une fonction FI51 d'import des modèles d'élévation géoréférencés, une fonction FI52 de précalcul des séries de tuiles aux différents niveaux de zoom et une fonction FI53 de calcul et d'envoi de séries de tuiles en fonction du niveau de zoom et du centre 104 de la carte virtuelle 101.

Le serveur de partage 8 peut exécuter une fonction FP60 de partage de la position et de l'orientation des casques, une fonction FP61 de partage des éléments 6 de mission en cours de modifications, par exemple pendant la modification d'une mission par un casque maître, et une fonction FP62 de partage du centre 104 de la carte 101 et du niveau de zoom.

L'éditeur numérique 4 de mission peut créer une mission comprenant des phases et des éléments de mission, grâce à la fonction F80 de création de mission. L'éditeur numérique 4 peut comprendre également une fonction F81 de modification de mission, une fonction F82 de suppression de mission, une fonction F83 de chargement de mission dans le serveur de mission 7 et une fonction F84 de collaboration hybride également désigné par mode « sandbox ».

Comme expliqué en partie précédemment, le serveur de mission 7 est configuré pour pouvoir exécuter les fonctions FM30 à FM41 de:
- création d'une mission FM30,
- renommage d'une mission FM31,
- suppression d'une mission FM32,
- création d'une phase dans une mission FM33,
- renommage d'une phase dans une mission FM34,
- suppression d'une phase dans une mission FM35,
- modification de l'ordre des phases dans une mission FM36,
- création d'un élément 6 de mission dans une phase FM37,
- modification d'un élément 6 de mission dans une phase FM38,
- suppression d'un élément 6 de mission dans une phase FM39,
- chargement d'une mission FM40 et
- chargement d'une phase FM41.

Chaque casque de réalité augmentée 10 (10a, 10b et 10c) est configuré pour pouvoir exécuter les fonctions FC01 à FC04 et FC06 à FC27 de :
- chargement d'une mission stockée sur le serveur de mission 7 FC01,
- affichage des éléments de mission sur la carte virtuelle 101 FC02,
- commande pour aller à la phase suivante FC03,
- commande pour aller à la phase précédente FC04,
- création d'une animation pour les éléments 6 de mission présents dans la phase courante et dans la phase suivante FC06,
- commande de création de mission FC07,
- commande de renommage de mission FC08,
- commande de création de phase d'une mission FC09,
- commande de modification d'une phase d'une mission FC10,
- commande de suppression d'une phase d'une mission FC11,
- commande de création d'un élément 6 de mission dans une phase FC12,
- commande de modification d'un élément 6 de mission dans une phase FC13,
- commande de suppression d'un élément 6 de mission dans une phase FC14,
- zoom en avant ou en arrière FC15,
- déplacement de la carte selon les axes longitudinaux X et Y FC16,
- exagération verticale FC17,
- visualisation des courbes de niveau FC18,
- analyse de pentes FC19,
- affichage de différentes couches sur la carte virtuelle 101 FC20, telles que des couches d'images satellites, de données vectorielles ou autres images géoréférencées,
- centrage de la carte sur un point saisi par l'utilisateur du casque 10 FC21,
- partage d'un point entre le casque maître et les casques spectateurs FC22,
- changement du rôle du casque FC23, le casque maître étant capable de donner son rôle de maître à un autre casque auparavant spectateur,
- affichage de l'identité 22a et 22b de chaque participant FC24,
- vérification périodique de la phase courante FC25,
- chargement d'une phase de la mission FC26,
- chargement d'une carte virtuelle 101 FC27.

Nous allons maintenant décrire des exemples d'enchaînements d'opérations dans le système de préparation de mission selon l'invention lors de la préparation des données cartographiques sur le serveur pour une zone déterminée.

Le serveur de cartographie 9 exécute par exemple une fonction FI50 d'import d'images géoréférencées, puis une fonction FI51 d'import des modèles d'élévation géoréférencés puis une fonction FI52 de précalcul des séries de tuiles aux différents niveaux de zoom.

Nous allons maintenant décrire des exemples d'enchaînements d'opérations dans le système de préparation de mission selon l'invention lors de l'initialisation d'une mission.

La mission est créée depuis l'éditeur de mission en exécutant la fonction F80 de création de mission puis la fonction F81 de modification de mission et enfin la fonction F83 de chargement de mission dans le serveur de mission 7.

Le serveur de mission exécute alors la fonction de création d'une mission FM30, la mission étant alors sauvegardée.

Le serveur de partage exécute alors la fonction FP60 de partage de la position et de l'orientation des casques ainsi que la fonction FP62 de partage du centre 104 de la carte 101 et du niveau de zoom.

La mission est ensuite chargée dans chaque casque qui exécute la fonction FC01 de chargement d'une mission stockée sur le serveur de mission. Puis la fonction FC03 de commande pour aller à la phase suivante est exécutée par le casque maître.

Le serveur de mission exécute alors la fonction de chargement d'une phase FM41 tandis que les casques exécutent les fonctions de vérification périodique de la phase courante FC25 et de chargement d'une phase de la mission FC26. Les casques peuvent également exécuter la fonction de création d'une animation pour les éléments 6 de mission présents dans la phase courante et dans la phase suivante FC06.

Nous allons maintenant décrire des exemples d'enchaînements d'opérations dans le système de préparation de mission selon l'invention lorsque l'utilisateur du casque maître souhaite par exemple déplacer la carte virtuelle 101.

Le casque maître réalise la fonction de déplacement de la carte virtuelle 101 selon les axes longitudinaux X et Y FC16. Cette fonction FC16 entraîne l'envoi d'une commande C200 de modification du centre 104 de la carte virtuelle 101 au serveur de partage 8.

Le serveur de partage 8 reçoit le nouveau centre 104 et notifie le réglage d'un nouveau centre 104 à tous les casques en réalisant la fonction FP62 de partage du centre 104 de la carte 101 et du niveau de zoom.

A réception de cette notification du serveur de partage 8 par les casques 10a, 10b et 10c, les casques envoient chacun une requête R201 de mise à jour de la carte 101 en précisant le nouveau centre 104 au serveur de cartographie 9 en réalisant la fonction de chargement d'une carte virtuelle FC27.

A réception de cette requête R201, le serveur de cartographie 9 renvoie les tuiles demandées en exécutant la fonction FI53 de calcul et d'envoi de séries de tuiles en fonction du niveau de zoom et du centre 104 de la carte virtuelle 101.

Les commandes générées sur le casque maître ont ainsi entraînés des calculs centralisés pour le partage d'un objet virtuel.

Nous allons maintenant décrire des exemples d'enchaînements d'opérations dans le système de préparation de mission selon l'invention lorsque l'utilisateur du casque maître souhaite par exemple réaliser un zoom avant ou arrière sur la carte virtuelle 101.

La fonction de zoom avant ou arrière FC15 est exécutée par le casque maître. Cette fonction de modification du niveau de zoom FC15 entraîne l'envoi d'une commande de modification du zoom de la carte virtuelle 101 au serveur de partage 8.

Le serveur de partage 8, après réception du nouveau niveau de zoom, notifie le réglage d'un nouveau niveau de zoom à tous les casques en réalisant la fonction FP62 de partage du centre 104 de la carte 101 et du niveau de zoom.

A réception de cette notification du serveur de partage 8 par les casques 10a, 10b et 10c, les casques envoient chacun, au serveur de cartographie 9, une requête R201 de mise à jour de la carte virtuelle en spécifiant le centre 104 de la carte et le niveau de zoom en exécutant la fonction de chargement d'une carte FC27.

A réception de cette requête R201, le serveur de cartographie 9 renvoie les tuiles demandées en réalisant la fonction FI53 de calcul et d'envoi de séries de tuiles en fonction du niveau de zoom et du centre 104 de la carte virtuelle 101.

Encore une fois des commandes générées sur le casque maître entraînent des calculs centralisés pour le partage d'un objet virtuel. La puissance de calcul est centralisée pour des performances au moins équivalentes au document de l'art antérieur où chaque flux est généré individuellement et où au surplus il peut apparaître des disparités d'affichage d'un casque à l'autre.

Par ailleurs, chaque utilisateur bénéficiant de sa propre vue 3D du terrain, ce qui lui permet de visualiser instantanément le terrain et de comprendre plus rapidement la situation relativement au terrain et à la mission.

Nous allons maintenant décrire des exemples d'enchaînements d'opérations dans le système de préparation de mission selon l'invention lorsque l'utilisateur du casque maître souhaite par exemple modifier une mission existante depuis son casque, par exemple en modifiant un ou plusieurs éléments 6 de mission dans une phase déterminée de la mission.

Le casque maître réalise la fonction de commande de modification d'un élément 6 de mission FC13.

Cette fonction FC13 entraîne l'envoi d'une commande de partage des modifications sur les éléments 6 de mission, au serveur de partage 8. Les utilisateurs des casques spectateurs sont alors notifiés d'une modification en cours , par exemple grâce au serveur de partage 8 qui réalise le partage la position de l'élément 6 de mission en cours d'édition en exécutant la fonction spécifique de partage des éléments 6 en cours de modifications FP61. Lorsque l'utilisateur du casque maître valide la modification comme définitive, en désactivant la fonction FC13 précédemment activée, le serveur de mission 7 réalise une fonction de sauvegarde de la mission dans le serveur de mission 7 FM38. Chaque casque demande alors au serveur de mission 7 les éléments 6 de mission actualisés en exécutant leur fonction FC26 de chargement de phase, tandis le serveur de mission exécute sa fonction FM41 de chargement de phase.

Lors du chargement d'une phase de mission, par exemple suite à une commande de changement de phase de mission telles que les fonctions de commande pour aller à la phase suivante FC03 ou de commande pour aller à la phase précédente FC04, exécutées par le casque maître, le serveur de mission 7 réalise la fonction de chargement d'une phase de mission FM41 et chaque casque réalise la fonction de chargement d'une phase de mission FC26.

Lorsqu'une nouvelle phase est chargée par le serveur de mission 7 ou lorsqu'une modification quelconque intervient sur une mission, par exemple une modification de phase ou d'élément 6 de mission, l'éditeur de mission 4 est notifié de la modification de mission, par exemple par le serveur de partage 8, et se met à jour en demandant les nouvelles données de mission au serveur de mission 7.

Nous allons maintenant décrire des exemples d'enchaînements d'opérations dans le système de préparation de mission selon l'invention lorsque l'utilisateur du casque maître souhaite par exemple utiliser les outils d'analyse de terrain.

L'utilisateur maître peut ainsi utiliser la fonction FC21 de centrage sur un lieu, la fonction FC16 pour translater la carte, la fonction FC15 de zoom, la fonction FC17 d'exagération du relief, la fonction FC20 de modification du fond de carte comme par exemple une vue satellite ou plan de ville, la fonction FC18 de visualisation des courbes de niveau ou la fonction FC19 d'analyse les pentes.

Le serveur de partage 8 réalise notamment la fonction de partage de la position et de l'orientation des casques FP60 ainsi que le partage FP62 du centre de carte et du niveau de zoom.

Nous allons maintenant décrire des exemples d'enchaînements d'opérations dans le système de préparation de mission selon l'invention lorsque l'utilisateur du casque maître souhaite par exemple créer une mission depuis le casque directement sur le serveur de mission 7, charger la mission dans les casques et la rejouer.

Le casque maître réalise, à la suite, les fonctions de commande de création de mission FC07, commande de renommage de mission FC08, commande de création d'au moins une phase d'une mission FC09 puis de commande de création d'au moins un élément 6 de mission dans une phase FC12. Le casque maître peut également exécuter une commande FC10 de modification d'une phase d'une mission ou une commande FC11 de suppression d'une phase d'une mission. Le casque maître peut aussi exécuter une commande FC13 de modification d'un élément 6 de mission dans une phase ou une commande FC14 de suppression d'un élément 6 de mission dans une phase.

Une commande FC01 de chargement de la mission est ensuite exécutée dans chaque casque.

Comme décrit précédemment, le casque maître peut ensuite passer de la phase courante à la phase suivante ou précédente de la mission ou encore réaliser des outils d'analyse de terrain.

Nous allons maintenant décrire des exemples d'enchaînements d'opérations dans le système de préparation de mission selon l'invention lors d'une collaboration hybride entre les casques et l'éditeur de mission.

Pour la préparation des données cartographiques sur le serveur de cartographie sur une zone déterminée, le serveur de cartographie 9 peut exécuter la fonction FI50 d'import d'images géoréférencées, la fonction FI51 d'import des modèles d'élévation géoréférencés et la fonction FI52 de précalcul des séries de tuiles aux différents niveaux de zoom.

Une mission est ensuite créée depuis l'éditeur qui exécute la fonction F80 de création de la mission, puis la fonction F81 de modification de mission et la fonction F83 de chargement de mission dans le serveur de mission 7.

Le serveur de mission 7 exécute alors la fonction FM30 de création d'une mission et réalise ainsi une sauvegarde de mission.

Le serveur de partage 8 exécute ensuite la fonction FP60 de partage de la position et de l'orientation des casques ainsi que la fonction FP62 de partage du centre 104 de la carte 101 et du niveau de zoom.

Chaque casque exécute alors la fonction de chargement de la mission stockée sur le serveur de mission 7.

On effectue ensuite le rejeu de la mission sur l'éditeur de mission en collaboration avec au moins un autre utilisateur portant un casque. La fonction sandbox F84 exécutée par l'éditeur de mission, permet de se synchroniser avec les casques grâce à un chargement périodique de la mission, dont la mission et la phase en cours, ainsi que le chargement périodique du centre de carte et du niveau de zoom.

Comme décrit précédemment, une commande pour aller à la phase suivante FC03 est par exemple exécutée par le casque maître. Un chargement d'une nouvelle phase FM41 est exécuté par le serveur mission tandis que chaque casque peut effectuer une vérification périodique FC25 de la phase courante et chargement FC26 d'une nouvelle phase de la mission.

## Revendications

1. Système de préparation de mission (1) dans une zone géoréférencée déterminée (5) à partir d'une cartographie (1000) numérique stockée en mémoire (3), comprenant un éditeur numérique de mission (4) dans la zone géoréférencée (5) générant un ensemble d'éléments (6) de mission géoréférencés évolutifs au cours de plusieurs phases temporelles déterminées (Ph1, Ph2, Ph3), **caractérisé en ce qu'**il comprend dans un réseau de communication (2) au moins :
- un serveur de mission (7) en liaison de communication avec l'éditeur de mission,
- un serveur de cartographie (9) générant une carte (101) à partir de la cartographie (1000) stockée,
- un serveur de partage (8) d'au moins un centre (104) de la carte (101) et
- une pluralité de casques (10a, 10b, 10c) de réalité augmentée,
au moins un des casques de réalité augmentée, dit maître (10a), étant apte à générer au moins une commande (C200) d'au moins une modification du centre (104) de la carte (101), chaque casque (10a, 10b, 10c) de réalité augmentée étant apte à recevoir au moins deux jeux de tuiles d'élévation et de terrain (102, 103) provenant du serveur de cartographies (9) sur requête (R201) de chaque casque, le serveur de mission (7) étant apte à s'interfacer avec l'éditeur de mission (4) et avec les casques (10a, 10b, 10c) de réalité augmentée pour partager et actualiser l'ensemble des éléments (6) de mission géoréférencés sur requête de chaque casque et les faire évoluer temporellement sur requête (R202) d'au moins le casque maître.

2. Système de préparation de mission selon la revendication 1, **caractérisé en ce que** chaque casque (10a, 10b, 10c) comprend une fonction (F11) de simulation d'hologramme, par affichage stéréoscopique, l'hologramme comprenant une cartographie en trois dimensions dans laquelle les tuiles de terrain (102) sont plaquées sur un relief constitué par les tuiles d'élévation (103) et superposant les éléments (6) de mission à hauteur du relief.

3. Système de préparation de mission selon la revendication 2, **caractérisé en ce que** la fonction (F11) de simulation d'hologramme de chaque casque (10a, 10b, 10c) réalise un calcul d'hologramme en trois dimensions dans une étendue (12) en bordure de l'hologramme affiché, prêt à être projeté de façon fluide en cas de modification du centre (104) de la carte (101).

4. Système de préparation de mission selon la revendication 3, **caractérisé en ce que** ledit casque maître (10a) active au moins une caméra (14a) pour reconnaissance au moins partielle d'une main (15a) d'un utilisateur (16a) du casque maître (10a) pour actionner des fonctions, proposées dans un menu affiché (17a), pour au moins une translation du centre (104) de la carte (101).

5. Système de préparation de mission selon l'une des revendications précédentes, **caractérisé en ce que** le dernier centre (104) de la carte (101) réglé par le casque maître (10a) est pris en compte pour les requêtes (R201) de tuiles de chaque casque, des transmissions de tuiles antérieures sur des centres modifiés intermédiaires étant abandonnées.

6. Système de préparation de mission selon l'une des revendications précédentes, **caractérisé en ce qu'**il comprend au moins un marqueur (18) disposé sur au moins un objet matériel autour duquel viennent les utilisateurs des casques, une image dudit marqueur étant capturée par une caméra (14a, 14b, 14c) de chaque casque (10a, 10b, 10c) et traitée pour réaliser un ajustement du positionnement du centre de la carte et un ajustement de l'orientation de la carte.

7. Système de préparation de mission selon la revendication 6, **caractérisé en ce que** ledit objet matériel autour duquel viennent les utilisateurs des casques se présente sous la forme d'une table (19) de surface correspondant sensiblement à la surface au sol de l'hologramme affiché.

8. Système de préparation de mission selon l'une des revendications 1 à 7, **caractérisé en ce que** le serveur de partage (8) réalise également un partage d'au moins la position (P10a, P10b, P10c) de chaque casque (10a, 10b, 10c) par rapport à la carte (101), ainsi qu'un partage du niveau de zoom.

9. Système de préparation de mission selon l'une des revendications 1 à 8, **caractérisé en ce que** le serveur de cartographie (9) calcule et stocke en mémoire, à partir de la cartographie numérique haute définition, une première série (S20) de tuiles d'un premier niveau de définition élevée et au moins une deuxième série (S21) de tuiles d'un deuxième niveau de définition moindre.

10. Système de préparation de mission selon l'une des revendications 1 à 9, **caractérisé en ce que** chaque casque (10a, 10b, 10c) comprend une fonction de détection de son environnement matériel.

## Patentansprüche

1. System zur Vorbereitung einer Mission (1) in einem bestimmten georeferenzierten Bereich (5) ausgehend von einer in einem Speicher (3) gespeicherten digitalen Kartografie (1000), mit einem digitalen Missionseditor (4) in dem georeferenzierten Bereich (5), der eine Gruppe von georeferenzierten Missionselementen (6) erzeugt, die sich im Laufe mehrerer bestimmter zeitlicher Phasen (Ph1, Ph2, Ph3) entwickeln, **dadurch gekennzeichnet, dass** es in einem Kommunikationsnetz (2) mindestens Folgendes umfasst:
- einen Missionsserver (7), der in Kommunikationsverbindung mit dem Missionseditor steht,
- einen Kartografieserver (9), der eine Karte (101) aus der gespeicherten Kartografie (1000) erzeugt,
- einen Sharing-Server (8) von mindestens einem Mittelpunkt (104) der Karte (101) und
- eine Vielzahl von Augmented-Reality-Headsets (10a, 10b, 10c),
wobei mindestens eines der Augmented-Reality-Headsets, das als Master (10a) bezeichnet wird, dazu geeignet ist, mindestens einen Befehl (C200) für mindestens eine Änderung des Mittelpunkts (104) der Karte (101) zu erzeugen, wobei jedes Augmented-Reality-Headset (10a, 10b, 10c) geeignet ist, mindestens zwei Sätze von Höhen- und Geländeplatten (102, 103) zu empfangen, die vom Kartografieserver (9) auf Anfrage (R201) jedes Headsets kommen, wobei der Missionsserver (7) geeignet ist, eine Schnittstelle mit dem Missionseditor (4) und mit den Augmented-Reality-Headsets (10a, 10b, 10c) zu bilden, um die Gesamtheit der georeferenzierten Missionselemente (6) auf Anfrage jedes Headsets zu teilen und zu aktualisieren und sie auf Anfrage (R202) von mindestens dem Master-Headset zeitlich weiterzuentwickeln.

2. Missionsvorbereitungssystem nach Anspruch 1, **dadurch gekennzeichnet, dass** jedes Headset (10a, 10b, 10c) eine Funktion (F11) zur Simulation eines Hologramms durch stereoskopische Anzeige umfasst, wobei das Hologramm eine dreidimensionale Kartografie umfasst, in der die Geländeplatten (102) auf ein durch die Höhenplatten (103) gebildetes Relief gedrückt werden und die Missionselemente (6) auf Höhe des Reliefs überlagern.

3. Missionsvorbereitungssystem nach Anspruch 2, **dadurch gekennzeichnet, dass** die Hologrammsimulationsfunktion (F11) jedes Headsets (10a, 10b, 10c) eine dreidimensionale Hologrammberechnung in einer Ausdehnung (12) am Rand des angezeigten Hologramms durchführt, das bereit ist, bei einer Änderung des Mittelpunkts (104) der Karte (101) fließend projiziert zu werden.

4. Missionsvorbereitungssystem nach Anspruch 3, **dadurch gekennzeichnet, dass** das Master-Headset (10a) mindestens eine Kamera (14a) zur mindestens teilweisen Erkennung einer Hand (15a) eines Benutzers (16a) des Master-Headsets (10a) aktiviert, um Funktionen zu betätigen, die in einem angezeigten Menü (17a) für mindestens eine Translation des Mittelpunkts (104) der Karte (101) angeboten werden.

5. Missionsvorbereitungssystem nach einem der vorhergehenden Ansprüche, **dadurch gekennzeichnet, dass** der letzte vom Master-Headset (10a) eingestellte Mittelpunkt (104) der Karte (101) für die Plattenanfragen (R201) jedes Headsets berücksichtigt wird, wobei frühere Plattenübertragungen auf modifizierte Zwischenmittelpunkte aufgegeben werden.

6. Missionsvorbereitungssystem nach einem der vorhergehenden Ansprüche, **dadurch gekennzeichnet, dass** es mindestens einen Marker (18) umfasst, der auf mindestens einem materiellen Objekt angeordnet ist, um das sich die Benutzer der Headsets einfinden, wobei ein Bild des Markers von einer Kamera (14a, 14b, 14c) jedes Headsets (10a, 10b, 10c) erfasst und verarbeitet wird, um eine Anpassung der Positionierung des Kartenmittelpunkts und eine Anpassung der Kartenausrichtung durchzuführen.

7. Missionsvorbereitungssystem nach Anspruch 6, **dadurch gekennzeichnet, dass** das materielle Objekt, um das sich die Benutzer der Headsets einfinden, in Form eines Tisches (19) vorliegt, dessen Oberfläche im Wesentlichen der Bodenfläche des angezeigten Hologramms entspricht.

8. Missionsvorbereitungssystem nach einem der Ansprüche 1 bis 7, **dadurch gekennzeichnet, dass** der Sharing-Server (8) auch ein Sharing von mindestens der Position (P10a, P10b, P10c) jedes Headsets (10a, 10b, 10c) in Bezug auf die Karte (101) sowie ein Sharing des Zoom-Levels durchführt.

9. Missionsvorbereitungssystem nach einem der Ansprüche 1 bis 8, **dadurch gekennzeichnet, dass** der Kartografieserver (9) aus der hochauflösenden digitalen Kartografie eine erste Serie (S20) von Platten eines ersten hohen Auflösungslevels und mindestens eine zweite Serie (S21) von Platten eines zweiten, niedrigeren Auflösungslevels berechnet und im Speicher ablegt.

10. Missionsvorbereitungssystem nach einem der Ansprüche 1 bis 9, **dadurch gekennzeichnet, dass** jedes Headset (10a, 10b, 10c) eine Funktion zur Erfassung seiner materiellen Umgebung umfasst.

## Claims

1. System for preparing a mission (1) in a determined georeferenced zone (5) from a digital mapping (1000) stored in a memory (3), comprising a digital mission editor (4) in the georeferenced zone (5) generating a set of georeferenced mission elements (6) which can change over the course of several determined temporal phases (Ph1, Ph2, Ph3), **characterised in that** it comprises in a communication network (2) at least:
- a mission server (7) in communication link with the mission editor,
- a mapping server (9) generating a map (101) from the stored mapping (1000),
- a server for sharing (8) at least one centre (104) of the map (101) and
- a plurality of augmented reality headsets (10a, 10b, 10c),
at least one of the augmented reality headsets, called master headset (10a), being capable of generating at least one command (C200) for at least one modification of the centre (104) of the map (101), each augmented reality headset (10a, 10b, 10c) being capable of receiving at least two sets of elevation and terrain tiles (102, 103) coming from the mapping server (9) on request (R201) of each headset, the mission server (7) being capable of interfacing with the mission editor (4) and with the augmented reality headsets (10a, 10b, 10c) to share and update the set of georeferenced mission elements (6) on request of each headset and to make them evolve temporally on request (R202) of at least the master headset.

2. Mission preparation system according to claim 1, **characterised in that** each headset (10a, 10b, 10c) comprises a hologram simulation function (F11), by stereoscopic display, the hologram comprising a three-dimensional mapping in which the terrain tiles (102) are placed over a relief constituted by the elevation tiles (103) and superimposing the mission elements (6) at the level of the relief.

3. Mission preparation system according to claim 2, **characterised in that** the hologram simulation function (F11) of each headset (10a, 10b, 10c) carries out a three-dimensional hologram calculation in an area (12) at the edge of the displayed hologram, ready to be projected in a fluid manner in the event of modification of the centre (104) of the map (101).

4. Mission preparation system according to claim 3, **characterised in that** said master headset (10a) activates at least one camera (14a) for at least partial recognition of a hand (15a) of a user (16a) of the master headset (10a) for actuating functions, proposed in a displayed menu (17a), for at least one translation of the centre (104) of the map (101).

5. Mission preparation system according to one of the preceding claims, **characterised in that** the last centre (104) of the map (101) adjusted by the master headset (10a) is taken into account for the tile requests (R201) of each headset, transmissions of previous tiles on intermediate modified centres being abandoned.

6. Mission preparation system according to one of the preceding claims, **characterised in that** it comprises at least one marker (18) arranged on at least one hardware object around which gather the users of the headsets, an image of said marker being captured by a camera (14a, 14b, 14c) of each headset (10a, 10b, 10c) and processed to carry out an adjustment of the positioning of the centre of the map and an adjustment of the orientation of the map.

7. Mission preparation system according to claim 6, **characterised in that** said hardware object around which gather the users of the headsets is in the form of a table (19) of surface corresponding substantially to the surface on the ground of the displayed hologram.

8. Mission preparation system according to one of claims 1 to 7, **characterised in that** the sharing server (8) also carries out a sharing of at least the position (P10a, P10b, P10c) of each headset (10a, 10b, 10c) with respect to the map (101), and a sharing of the zoom level.

9. Mission preparation system according to one of claims 1 to 8, **characterised in that** the mapping server (9) calculates and stores in a memory, from the high definition digital mapping, a first series (S20) of tiles of a first high definition level and at least one second series (S21) of tiles of a second lower definition level.

10. Mission preparation system according to one of claims 1 to 9, **characterised in that** each headset (10a, 10b, 10c) comprises a function for detecting its hardware environment.
